(19) Europäisches Patentamt / European Patent Office / Office européen des brevets

(11) **EP 1 380 925 B1**

(12) **EUROPEAN PATENT SPECIFICATION**

(45) Date of publication and mention
of the grant of the patent:
**24.02.2010 Bulletin 2010/08**

(51) Int Cl.:
***G06F 3/03*** *(2006.01)*

(21) Application number: **02015483.7**

(22) Date of filing: **12.07.2002**

(54) **Communicating with a human user to read 2-tuples into a computer**

Kommunikation mit einem menschlichen Benutzer zum Einlesen von 2-Tupeln in einen Computer

Communication avec un utilisateur pour la lecture de 2-uplets par un ordinateur

(84) Designated Contracting States:
**AT BE BG CH CY CZ DE DK EE ES FI FR GB GR IE IT LI LU MC NL PT SE SK TR**

(43) Date of publication of application:
**14.01.2004 Bulletin 2004/03**

(73) Proprietor: **SAP AG**
**69190 Walldorf (DE)**

(72) Inventor: **Detzler, Ralf**
**66557 Illingen (DE)**

(74) Representative: **Schiuma, Daniele Wolfgang**
**Müller-Boré & Partner**
**Grafinger Strasse 2**
**81671 München (DE)**

(56) References cited:
**EP-A- 0 342 838     EP-A- 0 533 424**
**US-A- 5 999 918**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

<u>Field of the Invention</u>

The present invention generally relates to data processing and, more particularly, relates to computer systems, computer programs, and methods that interact with a human user to receive a 2-tuple.

<u>Background</u>

Humans use Arabic digits (e.g., 0 to 9) and - optionally - decimal points to represent numbers. For example, the real number "65.8" uses the digits "6" and "5", the decimal point and the digit "8" in a conventional order from left to right.

Electronic number processing devices (from pocket calculators to weather station computers) need user interfaces to receive the digits and points from their users.

While keyboards belong to standard equipment for each desktop computer, keyboards consume substantial space for small-size computers. Several known solutions address the space problem by using pointing devices (e.g. mouse) or other input devices.

EP-A-0 533 424 discloses a multiple action icon whereby a single icon can be used in front-of-screen applications for selecting a plurality of actions to be performed. The actions are selected by positioning the cursor within the icon. In the preferred embodiment the icon is a dartboard in which the radial position of the cursor represents a first action to be performed and the angular position of the cursor represents a second action to be performed.

EP-A-0 342 838 discloses a user interface system and method which provides a user interface tool for simultaneously selecting a menu item and a value, from a range of values, for the menu item and can be referred to as a valuator menu, since it allows both the selection of a value from a range of values, and the selection of a menu item from a menu list. As a user moves a cursor over a menu of selectable items on a screen display, the item underneath the cursor is highlighted. In addition, as the user moves the cursor within the highlighted menu item, a value relative to the position of the cursor within that menu item is displayed. This valuator value is dynamically updated as the cursor position changes within the menu item. When the user performs an input selection, i.e. through a mouse button or a keyboard interaction, both the selected menu item and the value, relative to the cursor position, are simultaneously returned to the application program running on the data processing system.

There is a technical problem to use existing input devices for inputting data in given data structures.

This problem is solved according to the present invention by an apparatus for communicating with a human user having the features of claim 1, a communication method having the features of claim 13, and a computer program product having the features of claim 16. Preferred embodiments of the invention are defined in the respective dependent claims.

<u>Brief Description of the Drawings</u>

FIG. 1    illustrates an overview about 2-tuples;
FIG. 2    illustrates a simplified diagram of a 2-tuple reader of the present invention and a user operating it in an exemplary scenario;
FIG. 3    illustrates a simplified coordinate grid with first and second coordinates values;
FIG. 4    illustrates simplified diagrams of transition functions in first and second operation mode;
FIG. 5    illustrates simplified tables for exemplary transition functions in first and second operation mode;
FIG. 6    illustrates a method of the present invention; and
FIG. 7    illustrates a simplified diagram of a computer system.

<u>Detailed Description</u>

The above-mentioned technical problem is solved by apparatus, method and computer program according to the independent claims; wherein further embodiments are laid out in dependent claims.

In short, the solution relates to communicating with a human user to receive 2-tuple ALP.BET with first element ALP and second element BET for providing technical representation AB for 2-tuple ALP.BET.

A coordinate receiver receives first coordinate value X and second coordinate value Y through user interaction.

A coordinate converter converts first coordinate value X to first portion A of representation AB, according to first transition function F so that A represents ALP, and converts second coordinate value Y to second portion B of AB, according to second transition function G so that B represents BET.

The present invention can be implemented in digital electronic circuitry, in a computer under control of a computer program, or in combinations thereof. A detailed summary for computer und program is explained at the end of the specification.

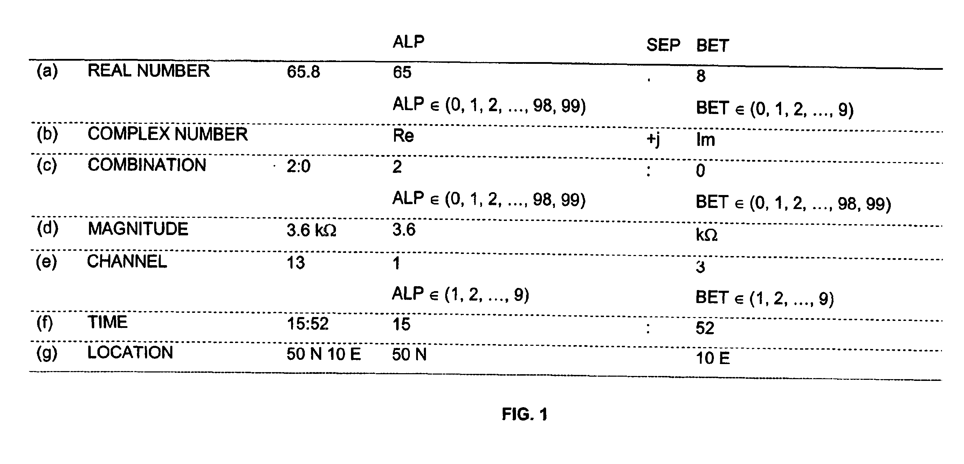

FIG. 1 illustrates an overview about 2-tuples. A 2-tuple (or "bituple", or "dituple") is a combination of 2 elements in a predefined order. The 2-tuple is abbreviated as "ALP.BET" with "ALP" being the first element and a "BET" being the second element. Both elements express quantities within predefined sets of quantities. The decimal point is optional and serves as separator SEP.

(a) In a first example for further explanation, 2-tuple ALP.BET is a real number with ALP being an integer from 0 to 99 and BET being an integer from 0 to 9, that is

$$\mathtt{ALP} \in (0, 1, 2, \ldots, 98, 99) \qquad (1)$$

$$\mathtt{BET} \in (0, 1, 2, \ldots, 9)$$

The integers in both sets (...,...,...) combine to 1000 combinations, among them "65.8".

Further examples:

(b) Complex number with ALP and BET being real (Re) and imaginary (Im) numbers in combination with SEP being plus/minus sign and character "j".

(c) Combination with ALP and BET being two numbers (real, integer) and SEP being an operation symbol (e.g., ":", "*", "+", "-"), expressing ratio, product, sum, or difference. (Sy) number, symbol, number.

(d) Physical magnitudes with ALP being numbers, BET being letters (e.g., 2.8 kΩ to express electrical resistance), optional SEP.

(e) Channel numbers for television and radio sets, for example, ALP and BET being digits for channels 01 to 99.

(f) Time indicators with ALP being hours from 0 to 23, and BET being minutes from 0 to 59, SEP conveniently as ":".

(g) Geographic location with latitude and longitude (e.g., 50 degree North; 10 degree East).

Both elements of the 2-tuple have technical representations. As used herein, "A" represents "ALP" and "B" represents "BET". Collectively, representation AB represents 2-tuple ALP.BET. In terms of computer implementations, different formats are common, such as bit patterns 0100 0001 and 0000 1000.

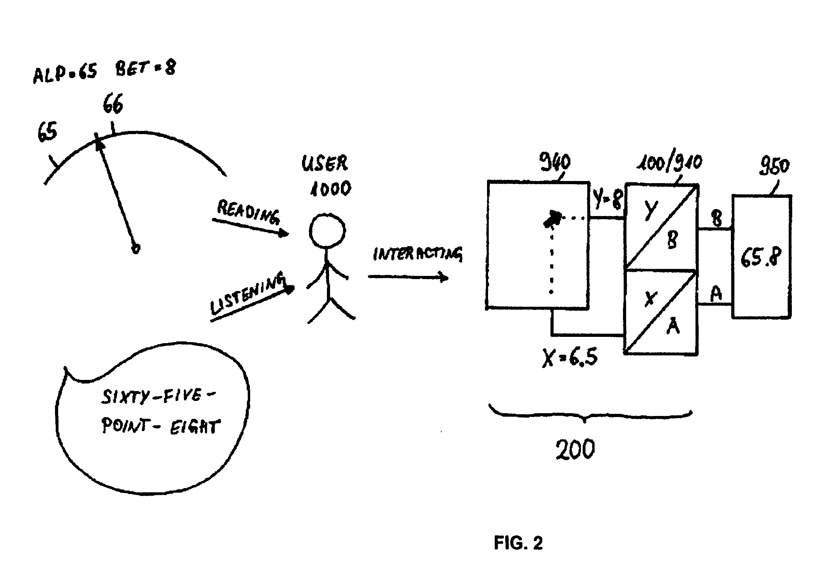

FIG. 2 illustrates a simplified diagram of 2-tuple reader 200 ("apparatus") of the present invention and human user 1000 operating it in an exemplary scenario (cf. (a)). The left side illustrates an analog measurement device with a pointer to exemplary real number "65.8". The user reads this number. Alternatively, the user listens to "sixty-five-point-eight" from an assistant (cf. balloon symbol). The user could also imagine the number without reading, listening or otherwise receiving it.

In both cases, reader 200 communicates with the user to receive 2-tuple ALP.BET and provides representation AB. Preferably, reader 200 is implemented by a computer (cf. FIG. 1) with coordinate receiver 940 (as input device) and by coordinate converter 100/910 (program controlled processor).

Coordinate receiver 940 receives values X and Y through user interaction.

Values X and Y have resolution that technically fit to receiver 940, such as

$$\mathtt{X, Y} \in (0.0, 0,1, \ldots, 9.9) \qquad (2)$$

Coordinate converter 100/910 converts value X to portion A according to function F, that is:

$$\mathtt{A = F(X)} \qquad (3)$$

and converts value Y to portion B according to function G, that is:

$$\mathtt{B = G(Y).} \qquad (4)$$

Exemplary elements ALP, BET, coordinate values X, Y, functions F, G and portions A, B are:

$$ALP \qquad = 65 \qquad\qquad (5)$$

$$X \qquad = 6.5$$

$$A \qquad = F(X) \quad = 10*X \quad = 65$$

$$BET \qquad = 8 \qquad\qquad (6)$$

$$Y \qquad = 8$$

$$B \qquad = G(Y) \quad = Y \qquad = 8$$

In the preferred embodiment, reader 200 is implemented as a computer with processor (e.g. processor 910) that is controlled by a computer program. For example, reader 200 belongs to a portable computer, a wristwatch, a clock, a television set, or a portable phone.

In a preferred embodiment, coordinate receiver 940 is a pointing device (e.g., computer-mouse or track-ball, touch-screen, stylus-and-screen device, joy-stick).

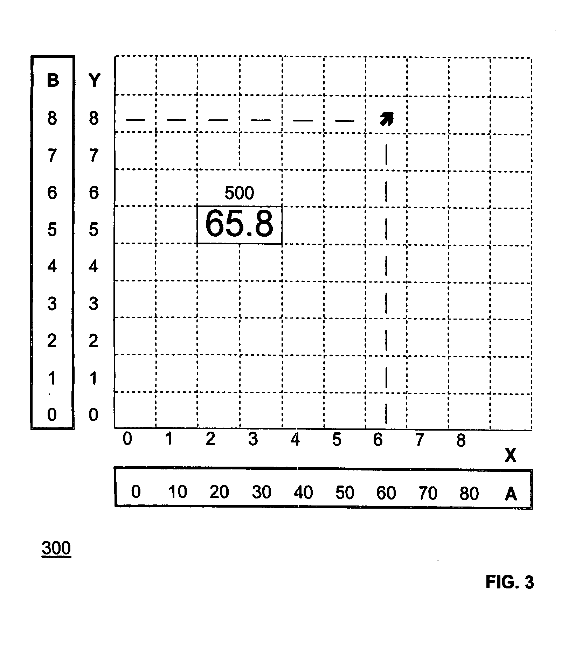

In the preferred embodiment, reader 200 further has display 950 for presenting a visual presentation (cf. 500 in FIG. 3) of the 2-tuple to the user.

FIG. 3 illustrates simplified coordinate grid 300 with first coordinate X on the abscissa axis and second coordinate Y on the ordinate axis. Preferably, grid 300 remains hidden from the user.

Exemplary elements ALP, BET, coordinate values X, Y, functions F, G and portions A, B are as stated above under (5) (6).

Double-dashed frames illustrates A and B (hidden from the user as well) according to exemplary functions F and G.

Grid 300 is - optionally - implemented by display 950 (cf. FIG. 2) and - optionally - has visual presentation 500 of the 2-tuple (e.g., "65.8"). Preferably, display 950 and coordinate receiver 940 are provided in combination (e.g., touch-screen).

Giving the above resolution for X and Y statement (2), the figures illustrates grid lines for every 10th possible value.

The coordinates can be rectangular coordinates (i.e. X and Y as illustrated) or polar coordinates (i.e. radius and angle).

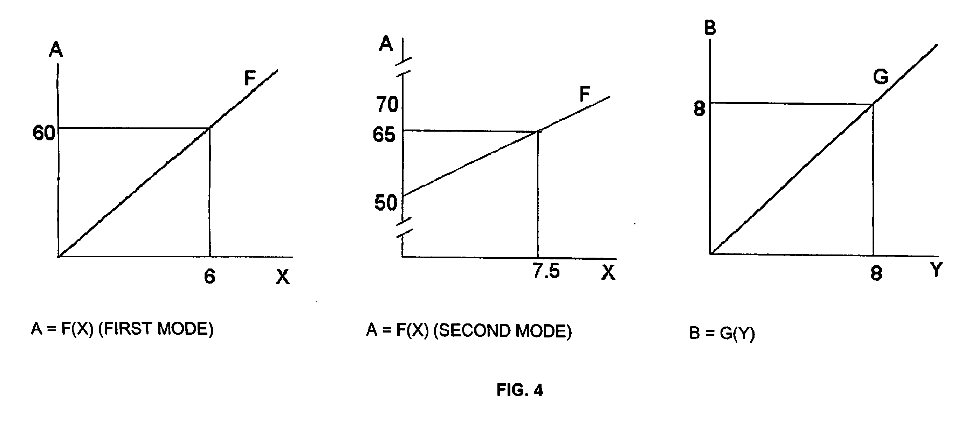

As explained in connection with FIGS. 4-5, coordinate converter 100/910 can use functions F and G according to the following principles:

- F and G can - optionally - change in consecutive operating modes to adapt the resolution of X and Y to resolutions of A and B.
- F and G can be arithmetic functions or table functions.
- F and G can have different properties.
- F and G can be applied simultaneously, or consecutively. Keeping A constant while applying G to obtain B reduces the risk of accidentally changing A again.

FIG. 4 illustrates simplified function diagrams of arithmetic functions F and G (cf. first example (a)). In the figures, F and G are linear (cf. statements (5), (6)), other definitions are also applicable, such as square functions (e.g. $A = X^2$), or logarithmic functions (e.g., $A = \lg X$).

More in detail, from left to right, the figures shows function F in a first mode, F in a second mode, and G (modes not distinguished).

Function F (first mode) is defined as in statement (5); receiver 940 preliminary receives coordinate X = 6 (hidden from the user). Converter 100/910 preliminary obtains corresponding portion A = 60.

Function F (second mode) uses "60" as a center number in a limited range from A = 50 to A = 70, that is:

$$A = 2*X + 50 \tag{7}$$

Receiver 940 receives X = 7.5; converter 100/910 converts to final A = 65.

Function G is defined as in statement (6); receiver 940 receives Y = 8; converter 100/910 converts to B = 8.

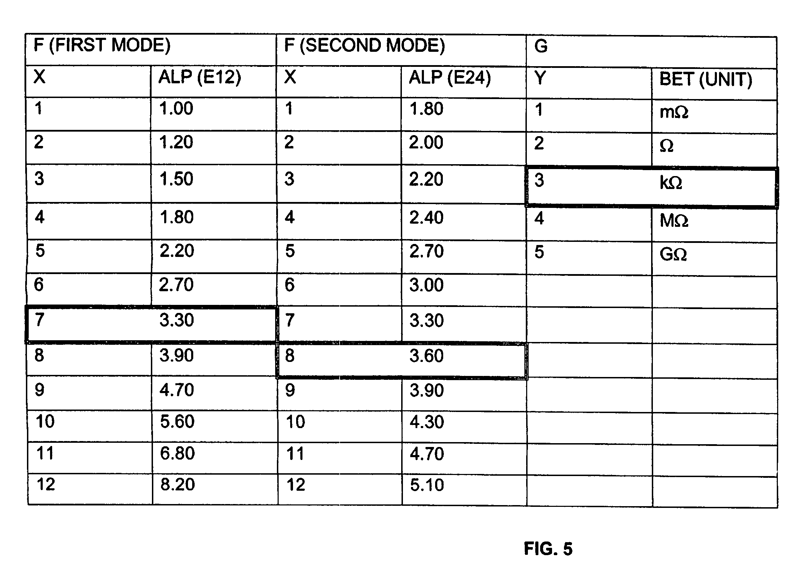

FIG. 5 illustrates tables of functions F and G for a second representative example. Assume that the user works as an end-of-line inspector in manufacturing electronic devices (e.g., inspecting electrical components of a computer). He or she reads resistor magnitudes ALP.BET (e.g. 3.6 k$\Omega$, cf. (d) in FIG. 1) and inputs it into reader 200 via touch-screen 940 (e.g., A = 3.6, B="k$\Omega$").

Touch-screen 940 should have a resolution with only 12 fields for each coordinate, that is

$$X, Y \in (1, 2, \ldots, 11, 12) \tag{8}$$

The resistors have nominations (or ALP) from 1.00 to 9.10 on a 24 number scale (e.g., IEC E24 resolution). Since the resolution for ALP does not fit the resolution for X (i.e. 24 > 12), function F is applied in consecutive first and second modes.

Reader 200 starts with F (first mode, E12), receiver 940 receives X = 7, converter 100/910 provides preliminary ALP = 3.30 (illustrated framed). Reader 200 waits for a predetermined waiting time (e.g. 500 milli seconds) and switches to F (second mode, E24). F follows a selection from the E24 scale with some ALP-numbers below and above 3.30.

After a further waiting time, X is received as X = 8 and ALP is kept to ALP = 3.60 (no changes are allowed), the user moves to input BET in a single operating mode to select a magnitude between m$\Omega$ and G$\Omega$, here k$\Omega$.

In other words, coordinate converter 100/910 consecutively operates in two operating modes: in a first mode (rough tuning, e.g. E12 scale) and in a second mode (fine tuning, e.g. E24 scale). The first mode uses initial function F (E12) that provides a preliminary magnitude (e.g., 3.30) in a first set (e.g., from 1.00 to 8.20), the second mode uses final function F (E24) that provide a final magnitude in a second set (e.g., 1,80 to 5.10, higher resolution). The second set (E24) is derived from the first set (E12).

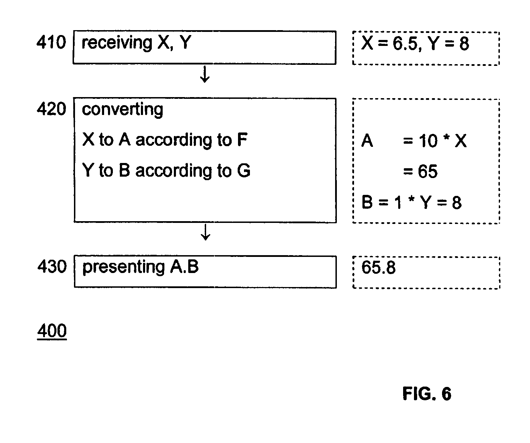

FIG. 6 illustrates method 400 of the present invention. Examples are indicated in dashed boxes on the right side.

Communication method 400 to receive a 2-tuple (with first element ALP and second element BET) comprises receiving 410, converting 420, and presenting steps 430. In step receiving 410, first coordinate value X and second coordinate value Y are received through user interaction.

In step converting 420, first coordinate value X is converted to first portion A (of first element ALP) according to first transition function F, and second coordinate value Y is converted to second portion B according to second transition function G.

In step presenting 430, first representation A and second representation B are presented to the user in combination (cf. 500 in FIG. 3).

Persons of skill in the art can add further functionality.

Further to the examples above, reader 200 can deal with 2-tuples that express electrical measurement results, body temperature (limited range for ALP from 35 to 43), results of a sports events (likes soccer games).

There could be more operating modes, for example, following E12, E24, E24 and E96 scales.

Computer System in General

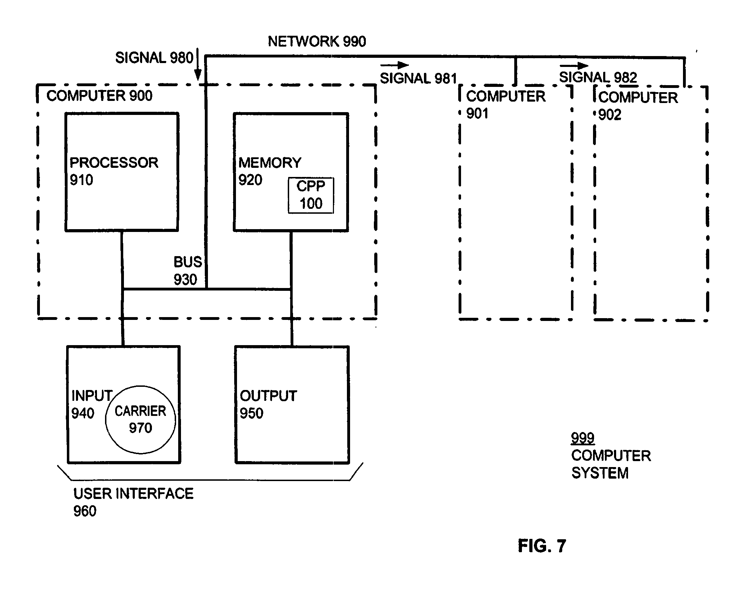

FIG. 7 illustrates a simplified block diagram of computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program". In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text-processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900. Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

While the invention has been described in conjunction with a preferred embodiment, it will be understood that the description is not intended to limit to that embodiment. On the contrary, the invention is intended to cover all alternatives, modifications, and equivalents as may be included within the spirit and scope of the invention as described by the appended claims.

References

| | |
|---|---|
| ∈ (..., ..., ...) | element of set |
| 100 | CPP |
| 100/910 | coordinate converter |
| 200 | reader |
| 300 | coordinate grid |
| 400, 4xx | method, steps |
| 500 | visual presentation |
| 900, 9xx | computer and components |
| 940 | coordinate receiver |
| AB | representation for 2-tuple |
| ALP | first element of 2-tuple |
| ALP.BET | 2-tuple |
| BET | second element of 2-tuple |
| F | first transition function |
| G | second transition function |
| X | first coordinate value |
| Y | second coordinate value |

**Claims**

1. Apparatus (200) for communicating with a human user (1000) to receive a first element (ALP) and a second element (BET), the apparatus (200) providing a representation (AB) for the combination of the first element (ALP) and the second element (BET), the apparatus (200) **characterized by**:

   a coordinate receiver (940) to receive a first coordinate value (X) and a second coordinate value (Y) through user interaction, and
   a coordinate converter (100/910) to convert the first coordinate value (X) to a first representation portion (A) of the representation (AB), according to a first transition function (F) so that the first representation portion (A) represents a first tuple element (ALP), and the second coordinate value (Y) to a second representation portion (B) of the representation (AB), according to a second transition function (G) so that the second representation portion (B) represents a second tuple element (BET),
   wherein
   the combination of the first tuple element (ALP) and the second tuple element (BET) is a 2-tuple (ALP.BET), and the coordinate converter (100/910) consecutively operates in two operating modes, wherein the coordinate converter (100/910) operates in the two operating modes for one of the two transition functions (F), for fine tuning the associated tuple element (ALP).

2. The apparatus (200) of claim 1, wherein the coordinate receiver (940) is a pointing device.

3. The apparatus (200) of claim 1 having an implementation selected from the group of: portable computer, wristwatch, clock, television set, remote control, radio, mobile phone.

4. The apparatus (200) of claim 1 being implemented by a computer with a processor (910) that is controlled by a computer program (100).

5. The apparatus (200) of claim 1, wherein the 2-tuple (ALP.BET) is selected from the group of: (a) real number, (b) complex number, (c) combination of numbers with operation symbol, (d) physical magnitude, (e) channel number, (f), time indicator, (g) geographic location.

6. The apparatus (200) of claim 1, further having a display (950) for presenting a visual presentation (500) of the 2-tuple to the user (1000).

7. The apparatus (200) of claim 6, wherein the display (950) and the coordinate receiver (940) are provided in combination.

8. The apparatus (200) of claim 1, wherein the first coordinate value (X) and the second coordinate value (Y) belong to rectangular coordinates.

9. The apparatus (200) of claim 1, wherein the first coordinate value (X) and the second coordinate value (Y) belong to polar coordinates.

10. The apparatus (200) of claim 1, wherein the coordinate converter (100/910) uses transition functions (F, G) that are arithmetic functions selected from the group of: linear function, square function, and logarithmic function.

11. The apparatus (200) of claim 1, wherein the coordinate converter (100/910) uses transition functions that are defined by tables.

12. The apparatus (200) of claim 1, wherein the coordinate converter (100/910) converts the second coordinate value (Y) to the second representation portion (B) while keeping the first representation portion (A) constant.

13. Communication method (400) to receive a first element (ALP) and a second element (BET), the method (400) providing a representation (AB) for the combination of the first element (ALP) and the second element (BET), the method (400) **characterized by**:

   receiving (410) a first coordinate value (X) and a second coordinate value (Y) through user interaction;
   converting (420) the first coordinate value (X) to a first representation portion (A) of the representation (AB) according to a first transition function (F) so that the first representation portion (A) represents a first tuple element (ALP), and converting the second coordinate value (Y) to a second representation portion (B) of the representation (AB) according to a second transition function (G) so that the second representation portion (B) represents a second tuple element (BET); and
   presenting (430) the first representation portion (A) in combination with the second representation portion (B) to the user (1000),
   wherein the combination of the first tuple element (ALP) and the second tuple element (BET) is implemented as a 2-tuple (ALP.BET), and the method further comprises the step of consecutively operating in two operating modes for one of the two transition functions (F), for fine tuning the associated tuple element (ALP).

14. The method (400) of claim 13, wherein step receiving (410) is performed using coordinates from any of the following systems: rectangular system and angular system.

15. Computer program product (100) comprising program code means for performing all the steps of any one of claims 13-14 when the program is run on a computer (900).

16. Computer program product (100) with computer code embodied on a computer readable medium to control a processor (910) of a computer (900) to receive a first element (ALP) and a second element (BET), the code providing a representation (AB) for the combination of the first element (ALP) and the second element (BET), the code **characterized by**:

code that causes the processor (910) to receive (410) a first coordinate value (X) and a second coordinate value (Y) through user interaction;

code that causes the processor (910) to convert (420) the first coordinate value (X) to a first representation portion (A) of the representation (AB) according to a first transition function (F) so that the first representation portion (A) represents a first tuple element (ALP), and converting the second coordinate value (Y) to a second representation portion (B) of the representation (AB) according to a second transition function (G) so that the second representation portion (B) represents a second tuple element (BET); and

code that causes the processor (910) to present (430) the first representation portion (A) in combination with the second representation portion (B) to the user (1000),

wherein the first tuple element (ALP) and the second tuple element (BET) are combined as a 2-tuple, and the code further comprises code that causes the processor (910) to consecutively operate in two operating modes for one of the two transition functions (F), for fine tuning the associated tuple element (ALP).

**Patentansprüche**

1. Vorrichtung (200) zum Kommunizieren mit einem menschlichen Benutzer (1000), um ein erstes Element (ALP) und ein zweites Element (BET) zu empfangen, wobei die Vorrichtung (200) eine Darstellung (AB) für die Kombination des ersten Elements (ALP) und des zweiten Elements (BET) bereitstellt, wobei die Vorrichtung (200) **gekennzeichnet ist durch**:

   einen Koordinatenempfänger (940) zum Empfangen eines ersten Koordinatenwerts (X) und eines zweiten Koordinatenwerts (Y) **durch** eine Benutzerinteraktion, und

   einen Koordinatenkonverter bzw. -umwandler (100/910) zum Umwandeln des ersten Koordinatenwerts (X) in einen ersten Darstellungsabschnitt (A) der Darstellung (AB) gemäß einer ersten Übergangsfunktion (F), so dass der erste Darstellungsabschnitt (A) ein erstes Tupel-Element (ALP) darstellt, und des zweiten Koordinatenwerts (Y) in einen zweiten Darstellungsabschnitt (B) der Darstellung (AB) gemäß einer zweiten Übergangsfunktion (G), so dass der zweite Darstellungsabschnitt (B) ein zweites Tupel-Element (BET) darstellt, wobei

   die Kombination des ersten Tupel-Elements (ALP) und des zweiten Tupel-Elements (BET) ein 2-Tupel (ALP.BET) ist,

   und der Koordinatenkonverter (100/910) fortlaufend in zwei Betriebsmodi arbeitet, wobei der Koordinatenkonverter (100/910) in den beiden Betriebsmodi für eine der beiden Übergangsfunktionen (F) arbeitet, um das assoziierte bzw. zugeordnete Tupel-Element (ALP) feinabzustimmen.

2. Vorrichtung (200) nach Anspruch 1, wobei der Koordinatenempfänger (940) eine Zeigeeinrichtung ist.

3. Vorrichtung (200) nach Anspruch 1 mit einer Implementierung, die aus der Gruppe aus tragbarer Computer, Armbanduhr, Uhr, Fernseher, Fernsteuerung, Radio, Mobiltelefon ausgewählt ist.

4. Vorrichtung (200) nach Anspruch 1, die durch einen Computer mit einem Prozessor (910) implementiert ist, der durch ein Computerprogramm (100) gesteuert bzw. geregelt wird.

5. Vorrichtung (200) nach Anspruch 1, wobei das 2-Tupel (ALP.BET) aus der Gruppe aus (a) reelle Zahl, (b) komplexe Zahl, (c) Kombination von Zahlen mit Operationssymbol, (d) physikalische Größe, (e) Kanalnummer, (f) Zeitanzeiger, (g) geographische Lage bzw. Standort.

6. Vorrichtung (200) nach Anspruch 1, die ferner ein Display bzw. eine Anzeige (950) aufweist, um dem Benutzer (1000) eine visuelle Darstellung (500) des 2-Tupels zu präsentieren.

7. Vorrichtung (200) nach Anspruch 6, wobei die Anzeige (950) und der Koordinatenempfänger (940) in Kombination vorgesehen sind.

8. Vorrichtung (200) nach Anspruch 1, wobei der erste Koordinatenwert (X) und der zweite Koordinatenwert (Y) zu rechtwinkligen Koordinaten gehören.

9. Vorrichtung (200) nach Anspruch 1, wobei der erste Koordinatenwert (X) und der zweite Koordinatenwert (Y) zu polaren Koordinaten gehören.

**10.** Vorrichtung (200) nach Anspruch 1, wobei der Koordinatenkonverter (100/910) Übergangsfunktionen (F, G) verwendet, die arithmetische Funktionen sind, die aus der Gruppe aus linearer Funktion, quadratischer Funktion und logarithmischer Funktion ausgewählt sind.

**11.** Vorrichtung (200) nach Anspruch 1, wobei der Koordinatenkonverter (100/910) Übergangsfunktionen verwendet, die durch Tabellen definiert sind.

**12.** Vorrichtung (200) nach Anspruch 1, wobei der Koordinatenkonverter (100/910) den zweiten Koordinatenwert (Y) in den zweiten Darstellungsabschnitt (B) umwandelt, während er den ersten Darstellungsabschnitt (A) konstant hält.

**13.** Kommunikationsverfahren (400) zum Empfangen eines ersten Elements (ALP) und eines zweiten Elements (BET), wobei das Verfahren (400) eine Darstellung (AB) für die Kombination des ersten Elements (ALP) und des zweiten Elements (BET) bereitstellt, wobei das Verfahren (400) **gekennzeichnet ist durch**:

Empfangen (410) eines ersten Koordinatenwerts (X) und eines zweiten Koordinatenwerts (Y) **durch** eine Benutzerinteraktion, und
Umwandeln (420) des ersten Koordinatenwerts (X) in einen ersten Darstellungsabschnitt (A) der Darstellung (AB) gemäß einer ersten Übergangsfunktion (F), so dass der erste Darstellungsabschnitt (A) ein erstes Tupel-Element (ALP) darstellt, und Umwandeln des zweiten Koordinatenwerts (Y) in einen zweiten Darstellungsabschnitt (B) der Darstellung (AB) gemäß einer zweiten Übergangsfunktion (G), so dass der zweite Darstellungsabschnitt (B) ein zweites Tupel-Element (BET) darstellt, und
Präsentieren (430) des ersten Darstellungsabschnitts (A) in Kombination mit dem zweiten Darstellungsabschnitt (B) dem Benutzer (1000),

wobei die Kombination des ersten Tupel-Elements (ALP) und des zweiten Tupel-Elements (BET) als ein 2-Tupel (ALP.BET) implementiert ist, und das Verfahren ferner den Schritt des fortlaufenden Arbeitens in zwei Betriebsmodi für eine der beiden Übergangsfunktionen (F) umfasst, um das assoziierte bzw. zugeordnete Tupel-Element (ALP) feinabzustimmen.

**14.** Verfahren (400) nach Anspruch 13, wobei der Schritt des Empfangens (410) unter Verwendung von Koordinaten aus einem der folgenden Systeme durchgeführt wird: rechtwinkeliges System und winkeliges System.

**15.** Computerprogrammprodukt (100) umfassend Programmcodemittel zum Durchführen aller Schritte nach einem der Ansprüche 13-14, wenn das Programm auf einem Computer (900) läuft.

**16.** Computerprogrammprodukt (100) mit Computercode, der auf einem computerlesbaren Medium ausgeführt ist bzw. wird, um einen Prozessor (910) eines Computers (900) zu steuern bzw. zu regeln, um ein erstes Element (ALP) und ein zweites Element (BET) zu empfangen, wobei der Code eine Darstellung (AB) für die Kombination des ersten Elements (ALP) und des zweiten Elements (BET) bereitstellt, wobei der Code **gekennzeichnet ist durch**:

einen Code, der den Prozessor (910) veranlasst, einen ersten Koordinatenwert (X) und einen zweiten Koordinatenwert (Y) **durch** eine Benutzerinteraktion zu empfangen (410),
einen Code, der den Prozessor (910) veranlasst, den ersten Koordinatenwert (X) in einen ersten Darstellungsabschnitt (A) der Darstellung (AB) gemäß einer ersten Übergangsfunktion (F) umzuwandeln, so dass der erste Darstellungsabschnitt (A) ein erstes Tupel-Element (ALP) darstellt, und den zweiten Koordinatenwert (Y) in einen zweiten Darstellungsabschnitt (B) der Darstellung (AB) gemäß einer zweiten Übergangsfunktion (G) umzuwandeln, so dass der zweite Darstellungsabschnitt (B) ein zweites Tupel-Element (BET) darstellt, und
einen Code, der den Prozessor (910) veranlasst, den ersten Darstellungsabschnitt (A) in Kombination mit dem zweiten Darstellungsabschnitt (B) dem Benutzer (1000) zu präsentieren (430),

wobei das erste Tupel-Element (ALP) und das zweite Tupel-Element (BET) als ein 2-Tupel kombiniert sind, und der Code ferner umfasst:

einen Code, der den Prozessor (910) veranlasst, fortlaufend in zwei Betriebsmodi für eine der beiden Übergangsfunktionen (F) zu arbeiten, um das assoziierte bzw. zugeordnete Tupel-Element (ALP) feinabzustimmen.

**Revendications**

1. Appareil (200) afin de communiquer avec un utilisateur humain (1000) pour recevoir un premier élément (ALP) et un second élément (BET), l'appareil (200) fournissant une représentation (AB) pour la combinaison du premier élément (ALP) et du second élément (BET), l'appareil (200) étant **caractérisé par** :

   un récepteur de coordonnées (940) pour recevoir une première valeur de coordonnées (X) et une seconde valeur de coordonnées (Y) par l'interaction de l'utilisateur ; et
   un convertisseur de coordonnées (100/910) pour convertir la première valeur de coordonnées (X) sur une première partie de représentation (A) de la représentation (AB), selon une première fonction de transition (F) de sorte que la première partie de représentation (A) représente un premier élément de rangée (tuple) (ALP), et pour convertir la seconde valeur de coordonnées (Y) sur une seconde partie de représentation (B) de la représentation (AB), selon une seconde fonction de transition (G) de sorte que la seconde partie de représentation (B) représente un second élément de rangée (BET),
   dans lequel
   la combinaison du premier élément de rangée (ALP) et du second élément de rangée (BET) est un 2 rangées (ALP, BET),
   et le convertisseur de coordonnées (100/910) opère consécutivement dans deux modes opératoires où le convertisseur de coordonnées (100/910) opère dans les deux modes opératoires pour une des deux fonctions de transition (F) pour la syntonisation précise de l'élément de rangée (ALP), y étant associé.

2. Appareil (200) selon la revendication 1, dans lequel le récepteur de coordonnées (940) est un dispositif de pointage.

3. Appareil (200) selon la revendication 1, ayant une implémentation sélectionnée parmi le groupe : ordinateur portable, montre-bracelet, chronomètre, set de télévision, commande éloignée, radio, téléphone portable.

4. Appareil (200) selon la revendication 1, étant implémenté par un ordinateur avec un processeur (910) qui est commandé par un programme d'ordinateur (100).

5. Appareil (200) selon la revendication 1, dans lequel le 2 rangées (ALP, BET) est sélectionné parmi le groupe : (a) nombre réel, (b) nombre complexe, (c) combinaison de nombres avec symbole opérationnel, (d) grandeur physique, (e) numéro de canal, (f) indicateur de temps, (g) emplacement géographique.

6. Appareil (200) selon la revendication 1, ayant en outre un afficheur (950) pour présenter une présentation visuelle (500) du 2 rangées à l'utilisateur (1000).

7. Appareil (200) selon la revendication 6, dans lequel l'afficheur (950) et le récepteur de coordonnées (940) sont prévus en combinaison.

8. Appareil (200) selon la revendication 1, dans lequel la première valeur de coordonnées (X) et la seconde valeur de coordonnées (Y) appartiennent à des coordonnées rectangulaires.

9. Appareil (200) selon la revendication 1, dans lequel la première valeur de coordonnées (X) et la seconde valeur de coordonnées (Y) appartiennent à des coordonnées polaires.

10. Appareil (200) selon la revendication 1, dans lequel le convertisseur de coordonnées (100/910) utilise les fonctions de transition (F, G) qui sont des fonctions arithmétiques sélectionnées parmi le groupe : fonction linéaire, fonction au carré et fonction logarithmique.

11. Appareil (200) selon la revendication 1, dans lequel le convertisseur de coordonnées (100/910) utilise des fonctions de transition qui sont définies par des tableaux.

12. Appareil (200) selon la revendication 1, dans lequel le convertisseur de coordonnées (100/910) convertit la seconde valeur de coordonnées (Y) vers la seconde partie de représentation (B) tout en gardant la première partie de représentation (A) constante.

13. Procédé de communication (400) afin de recevoir un premier élément (ALP) et un second élément (BET), le procédé (400) fournissant une représentation (AB) pour la combinaison du premier élément (ALP) et du second élément (BET), le procédé (400) étant **caractérisé par** :

la réception (410) d'une première valeur de coordonnées (X) et d'une seconde valeur de coordonnées (Y) par l'interaction de l'utilisateur ;
la conversion (420) de la première valeur de coordonnées (X) sur une première partie de représentation (A) de la représentation (AB), selon une première fonction de transition (F) de sorte que la première partie de représentation (A) représente un premier élément de rangée (ALP), et la conversion de la seconde valeur de coordonnées (Y) sur une seconde partie de représentation (B) de la représentation (AB), selon une seconde fonction de transition (G) de sorte que la seconde partie de représentation (B) représente un second élément de rangée (BET), et
la présentation (430) de la première partie de représentation (A) en combinaison avec la seconde partie de représentation (B) à l'utilisateur (1000),
dans lequel la combinaison du premier élément de rangée (ALP) et du second élément de rangée (BET) est implémentée comme un 2 rangées (ALP, BET), et dans lequel le procédé comprend en outre l'étape d'opérer consécutivement dans deux modes opératoires pour une des deux fonctions de transition (F) pour la syntonisation précise de l'élément de rangée (ALP), y étant associé.

14. Procédé (400) selon la revendication 13, dans lequel l'étape de réception (410) est accomplie en utilisant des coordonnées depuis un quelconque des systèmes suivants : système rectangulaire et système angulaire.

15. Produit de programme d'ordinateur (100) comprenant un moyen de code de programme pour accomplir toutes les étapes d'une quelconque des revendications 13-14 lorsque le programme tourne sur un ordinateur (900).

16. Produit de programme d'ordinateur (100) doté d'un code d'ordinateur intégré sur un support lisible par un ordinateur afin de commander un processeur (910) d'un ordinateur (900) pour recevoir un premier élément (ALP) et un second élément (BET), le code fournissant une représentation (AB) pour la combinaison du premier élément (ALP) et du second élément (BET), le code étant **caractérisé par** :

un code qui provoque que le processeur (910) reçoive (410) une première valeur de coordonnées (X) et une seconde valeur de coordonnées (Y) par l'interaction de l'utilisateur ;
un code qui provoque que le processeur (910) convertisse (420) la première valeur de coordonnées (X) sur une première partie de représentation (A) de la représentation (AB), selon une première fonction de transition (F) de sorte que la première partie de représentation (A) représente un premier élément de rangée (ALP), et convertisse la seconde valeur de coordonnées (Y) sur une seconde partie de représentation (B) de la représentation (AB), selon une seconde fonction de transition (G) de sorte que la seconde partie de représentation (B) représente un second élément de rangée (BET), et
un code qui provoque que le processeur (910) présente la première partie de représentation (A) en combinaison avec la seconde partie de représentation (B) à l'utilisateur (1000),

dans lequel le premier élément de rangée (ALP) et le second élément de rangée (BET) sont combinés comme un 2 rangées, et dans lequel le code comprend en outre :

un code qui provoque que le processeur (910) opère consécutivement dans deux modes opératoires pour une des deux fonctions de transition (F) pour la syntonisation précise de l'élément de rangée (ALP), y étant associé.

|  |  |  | ALP | SEP | BET |
| --- | --- | --- | --- | --- | --- |
| (a) | REAL NUMBER | 65.8 | 65 | . | 8 |
|  |  |  | ALP $\in$ (0, 1, 2, ..., 98, 99) |  | BET $\in$ (0, 1, 2, ..., 9) |
| (b) | COMPLEX NUMBER |  | Re | +j | Im |
| (c) | COMBINATION | 2:0 | 2 | : | 0 |
|  |  |  | ALP $\in$ (0, 1, 2, ..., 98, 99) |  | BET $\in$ (0, 1, 2, ..., 98, 99) |
| (d) | MAGNITUDE | 3.6 k$\Omega$ | 3.6 |  | k$\Omega$ |
| (e) | CHANNEL | 13 | 1 |  | 3 |
|  |  |  | ALP $\in$ (1, 2, ..., 9) |  | BET $\in$ (1, 2, ..., 9) |
| (f) | TIME | 15:52 | 15 | : | 52 |
| (g) | LOCATION | 50 N 10 E | 50 N |  | 10 E |

**FIG. 1**

ALP=65  BET=8

66

65

USER
1000

READING

INTERACTING

LISTENING

SIXTY-FIVE-
POINT-EIGHT

940    100/910    950

Y=8    Y
       B        8

       X        65.8
       A    A

X=6.5

200

FIG. 2

EP 1 380 925 B1

| B | Y |
|---|---|
| 8 | 8 |
| 7 | 7 |
| 6 | 6 |
| 5 | 5 |
| 4 | 4 |
| 3 | 3 |
| 2 | 2 |
| 1 | 1 |
| 0 | 0 |

500

**65.8**

0 1 2 3 4 5 6 7 8   X

| 0 | 10 | 20 | 30 | 40 | 50 | 60 | 70 | 80 | A |
|---|----|----|----|----|----|----|----|----|---|

300

FIG. 3

FIG. 4

A = F(X) (FIRST MODE)

A = F(X) (SECOND MODE)

B = G(Y)

| F (FIRST MODE) | | F (SECOND MODE) | | G | |
|---|---|---|---|---|---|
| X | ALP (E12) | X | ALP (E24) | Y | BET (UNIT) |
| 1 | 1.00 | 1 | 1.80 | 1 | mΩ |
| 2 | 1.20 | 2 | 2.00 | 2 | Ω |
| 3 | 1.50 | 3 | 2.20 | 3 | kΩ |
| 4 | 1.80 | 4 | 2.40 | 4 | MΩ |
| 5 | 2.20 | 5 | 2.70 | 5 | GΩ |
| 6 | 2.70 | 6 | 3.00 | | |
| 7 | 3.30 | 7 | 3.30 | | |
| 8 | 3.90 | 8 | 3.60 | | |
| 9 | 4.70 | 9 | 3.90 | | |
| 10 | 5.60 | 10 | 4.30 | | |
| 11 | 6.80 | 11 | 4.70 | | |
| 12 | 8.20 | 12 | 5.10 | | |

**FIG. 5**

410 | receiving X, Y | X = 6.5, Y = 8

↓

420 | converting

X to A according to F
Y to B according to G

A   = 10 * X
    = 65

B = 1 * Y = 8

↓

430 | presenting A.B | 65.8

400

FIG. 6

FIG. 7

**EP 1 380 925 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0533424 A
- EP 0342838 A